# EUROPÄISCHE PATENTSCHRIFT

(11) **EP 3 381 702 B1**
(45) Veröffentlichungstag und Bekanntmachung des Hinweises auf die Patenterteilung: **07.04.2021**
(21) Anmeldenummer: 18157317.1
(22) Anmeldetag: 19.02.2018
(51) Int. Cl.: B41J 2/21, H04N 1/407

(54) **VERFAHREN ZUM EINRICHTEN UND BETREIBEN EINER TINTENDRUCKMASCHINE FÜR EINEN DRUCKAUFTRAG**
METHOD FOR SETTING UP AND OPERATING AN INK JET PRINTER FOR A PRINT JOB
PROCÉDÉ DE CONFIGURATION ET DE FONCTIONNEMENT D'UNE IMPRIMANTE À JET D'ENCRE POUR UNE TÂCHE D'IMPRESSION

(30) Priorität: 29.03.2017 DE 102017205280
(43) Veröffentlichungstag der Anmeldung: 03.10.2018
(73) Patentinhaber: Heidelberger Druckmaschinen AG, 69115 Heidelberg (DE)
(72) Erfinder: Hauck, Dr. Axel, 76227 Karlsruhe (DE); Röhl, Sabine, 69115 Heidelberg (DE); Kaiser, Michael, 69118 Heidelberg (DE); Müller, Rolf, 69226 Nußloch (DE); Pfeiffer, Nikolaus, 69118 Heidelberg (DE)

(56) Entgegenhaltungen:
- EP-A1- 1 168 822
- EP-A1- 1 594 014
- WO-A1-2015/110169
- DE-B3-102011 015 603

## Beschreibung

Die vorliegende Erfindung betrifft ein Verfahren mit den Merkmalen von Anspruch 1.

Die Erfindung liegt auf dem technischen Gebiet der grafischen Industrie und dort insbesondere im Bereich des Tintendrucks (Inkjet), d.h. des Auftragens und Trocknens oder Härtens von flüssiger Tinte.

Das Auftragen flüssiger Tinte erfolgt bei dem bekannten DOD-Tintendruckverfahren (drop-on-demand) erfolgt, indem ein Druckbild auf einem Bedruckstoff erzeugt wird, wobei ein Druckkopf dem zu druckenden Bild entsprechend feinste Tintentropfen erzeugt und diese berührungslos als Druckpunkte auf den Bedruckstoff überträgt. Der Bedruckstoff kann dabei aus Papier, Karton oder Kunststoff bestehen und bogen- oder bahnförmig sein.

Das thermische Trocknen flüssiger Tinte auf Bedruckstoffen, insbesondere von wasserbasierten Tinten oder Lacken, erfolgt durch ein Beaufschlagen des aufgetragenen Fluides mit elektromagnetischer Strahlung (und/oder mit Heißluft), insbesondere durch Infrarot- bzw. IR- oder NIR-Strahlung. Dabei wird das Fluid erhitzt und dessen Lösungsmittel verdampft.

Beim so genannten wasserbasierten Tintendruck enthält die flüssige Tinte einen Anteil Wasser zur Aufnahme des Farbmittel, insbesondere eines Pigments. Dieser Wasseranteil muss bei der Trocknung der Tinte aus der Tinte oder aus dem Bedruckstoff entfernt werden, z.B. durch Verdampfen. Hochwertige Drucke benötigen viel Tinte, z.B. um einen großen Farbraum zu erzielen, und müssen daher intensiv getrocknet werden. Zu starkes Trocknen kann allerdings zu sichtbaren Störungen führen.

Eine unter dem Produktnamen "Primefire" bekannte und von der Heidelberger Druckmaschinen AG, Deutschland, entwickelte Tintendruckmaschine für die industrielle Produktion bedruckt Papierbogen mit wasserbasierten Inkjet-Tinten. Die Maschine umfasst sieben aufeinander folgende Druckstationen, welche die Farben CMYK (Cyan, Magenta, Gelb und Schwarz) und OGV (Orange, Grün, Violett) mit Druckköpfen auf das Papier übertragen. Die aufgetragenen Tinten werden unter Einsatz von IR-Trocknern getrocknet.

Die EP 1 168 822 A1 beschreibt ein Verfahren zum Kalibrieren eines Farbdruckers, wobei das Verfahren dazu dient, die Farbmenge für den Vollton zu bestimmen.

Die WO 2015/110169 A1 offenbart ein Verfahren zum Bestimmen einer Menge eines durchscheinenden Druckfluids. Das beispielhafte Verfahren umfasst das Drucken einer Mehrzahl von Testmustern mit unterschiedlichen Anteilen von farbigen und durchscheinenden Druckflüssigkeiten. Die Vielzahl von Testmustern umfasst einen ersten Bereich und einen zweiten Bereich, der an den ersten Bereich angrenzt, wobei sich eine Farbe des zweiten Bereichs von einer Farbe des ersten Bereichs unterscheidet. Die Migrationseigenschaften der Vielzahl von Testmustern werden analysiert, um die Menge an durchscheinendem Druckfluid zu bestimmen, die für einen nachfolgenden Druckvorgang verwendet werden soll.

Vor diesem Hintergrund ist es eine Aufgabe der vorliegenden Erfindung, ein gegenüber dem Stand der Technik verbessertes Verfahren zu schaffen, welches es ermöglicht, im industriellen Umfeld hochqualitative Tintendrucke durch präzisen Tintenauftrag und präzise Tintentrocknung zu erzeugen.

Diese Aufgabe wird erfindungsgemäß durch ein Verfahren nach Anspruch 1 gelöst. Vorteilhafte und daher bevorzugte Weiterbildungen der Erfindung ergeben sich aus den Unteransprüchen sowie aus der Beschreibung und den Zeichnungen.

Die Erfindung betrifft ein Verfahren zum Einrichten und Betreiben einer Tintendruckmaschine für einen Druckauftrag, wobei die Tintendruckmaschine wenigstens drei Tinten-Druckköpfe und wenigstens einen thermischen Trockner umfasst, der Druckauftrag auf einem Bedruckstoff mit wasserbasierter, schwarzer Tinte und mit wenigstens zwei wasserbasierten, bunten Tinten ausgeführt wird und wobei: a) mehrere erste Testdrucke eines ersten Testmusters, welches wenigstes zwei oder mehr Testfelder unterschiedlicher Flächendeckung umfasst, mit der wasserbasierten, schwarzen Tinte auf dem Bedruckstoff erzeugt werden, die ersten Testdrucke bei verschiedenen Temperaturen thermisch getrocknet werden und die getrockneten ersten Testdrucke zur Bestimmung einer Temperatur T für den Betrieb des Trockners bei dem Druckauftrag ausgewertet werden; b) ein zweiter Testdruck eines zweiten Testmusters, welches wenigstes zwei oder mehr Testfelder unterschiedlicher Tintenmenge umfasst, mit den wenigstens zwei wasserbasierten bunten Tinten auf dem Bedruckstoff erzeugt wird, der zweite Testdruck bei der Temperatur T thermisch getrocknet wird und der getrocknete zweite Testdruck zur Bestimmung einer Gesamttintenmenge M für den Betrieb der Druckköpfe bei dem Druckauftrag ausgewertet wird; und c) die Temperatur T und die Gesamttintenmenge M der Tintendruckmaschine für den Druckauftrag bereitgestellt werden und der Druckauftrag ausgeführt wird.

Die Erfindung zeichnet sich weiterhin dadurch aus, dass das Auswerten der getrockneten ersten Testdrucke erfolgt, indem in wenigstens einem Testfeld des ersten Testmusters geprüft wird, ob der getrocknete Bedruckstoff und/oder die getrocknete wasserbasierte, schwarze Tinte frei von sichtbaren bzw. optisch detektierbaren Störungen ist. Solche Störungen können z.B. Matt-Glanz-Unterscheide oder sogar Blasenbindung sein.

Die Erfindung zeichnet sich weiterhin dadurch aus, dass das Auswerten des getrockneten zweiten Testmusters erfolgt, indem in wenigstens einem Testfeld des zweiten Testmusters geprüft wird, ob die getrockneten wasserbasierten, bunten Tinten einen vorgegebenen Widerstandsgrenzwert erreichen oder unterschreiten, insbesondere den SR-Wert ("Surface Resistance"-Wert). Der SR-Wert kann z.B. mit handelsüblichen Messgeräten über eine Kontakt-Widerstandsmessung ermittelt werden, z.B. mit dem Gerät "HK-300-2" von Kett-Instruments. Eine solche Messung kann erfindungsgemäß auch automatisiert in der Druckmaschine, an einem Bedienpult, auf einem Messtisch oder in einem dafür ausgelegten Peripheriegerät erfolgen.

Das erfindungsgemäße Verfahren, insbesondere die erfindungsgemäß ermittelten Werte für die Trocknungstemperatur T und die Gesamttintenmenge M, erlaubt es, vorzugsweise im industriellen Umfeld, hochqualitative Tintendrucke durch präzisen Tintenauftrag und präzise Tintentrocknung herzustellen. Dabei kann in vorteilhafter Weise eine hohe Druckqualität erzeugt werden, insbesondere kann ein hohes, so genanntes "Ink Limit" (für eine Einzelfarbe) oder "Total Ink Limit" (für alle Farben gemeinsam, d.h. im Übereinanderdruck; entspricht Gesamttintenmenge M) und daher auch ein großer Farbraum erreicht werden. Dabei wird auch in vorteilhafter Weise verhindert, dass Druckprodukte nicht vollständig getrocknet sind und z.B. Papierbogen miteinander verkleben. Das Verfahren erlaubt in vorteilhafter Weise zudem das automatisierte und somit zügige Einrichten und Betreiben einer Tintendruckmaschine. Auf diese Weise kann insbesondere unerwünschte Makulatur vermieden werden.

Die derart ermittelten Werte für T und M können für den bei der Auswertung verwendeten Bedruckstoff (in Kombination mit den verwendeten Tinten) z.B. in einem Rechner bzw. dessen Speicher gespeichert und später in vorteilhafter Weise für gleiche Druckaufträge (gleicher Bedruckstoff, gleiche Tinten) sehr schnell wieder aufgerufen werden.

Das Verfahren kann auch in Abhängigkeit von der Transportgeschwindigkeit des Bedruckstoffs, welche über die verfügbare Trocknungszeit (Verhältnis der Trocknerstrecke zur Transportgeschwindigkeit) Auswirkung auf das Trockenergebnis hat, durchgeführt werden. Geschwindigkeitsabhängige Werte für T und M können ebenfalls in vorteilhafter Weise gespeichert und im Bedarfsfall abgerufen werden.

Die im erfindungsgemäßen Verfahren genannten wenigstens drei Tinten-Druckköpfe können auch wenigstens drei Gruppen von Tinten-Druckköpfe sein. Solche Gruppen können in Querrichtung zum Transport des Bedruckstoffs benachbart zueinander angeordnete Tinten-Druckköpfe umfassen (so genannte "Druckbalken" oder Englischs "print bars"). Die Testdrucke können von je einem Tinten-Druckkopf einer Gruppe erzeugt werden oder alternativ von je mehreren.

Eine bevorzugte Weiterbildung der Erfindung kann sich dadurch auszeichnen, dass das Auswerten in allen Testfeldern des ersten Testmusters erfolgt.

Eine bevorzugte Weiterbildung der Erfindung kann sich dadurch auszeichnen, dass die getrockneten ersten Testdrucke optisch ausgewertet werden, insbesondere mit einer optischen Kamera und einer Einrichtung zur digitalen Bildverarbeitung.

Eine bevorzugte Weiterbildung der Erfindung kann sich dadurch auszeichnen, dass das Auswerten in allen Testfeldern des zweiten Testmusters erfolgt.

Eine bevorzugte Weiterbildung der Erfindung kann sich dadurch auszeichnen, dass der getrocknete zweite Testdruck über eine Widerstandsmessung, insbesondere mit einem Widerstandssensor, ausgewertet wird.

Eine für die rechnergestützte Durchführung bevorzugte Weiterbildung der Erfindung kann sich dadurch auszeichnen, dass
a) ein erstes Testmuster mit wasserbasierter, schwarzer Tinte auf ein Substrat gedruckt und bei einer Temperatur Tᵢ thermisch getrocknet wird; und durch Auswerten des getrockneten ersten Testmusters ein Wert Kᵢ, mit Kᵢ=1 oder Kᵢ=-1, bestimmt wird; Schritt a) für i=1 durchgeführt wird; Schritt a) für i = 2 bis imax bei einer jeweiligen Temperatur Tᵢ = Tᵢ₋₁ + Kᵢ₋₁^{∗}dT, mit dT > 0 Kelvin durchgeführt wird, solange gilt: Kᵢ^{∗}Kᵢ₋₁=1; und dass
b) ein zweites Testmuster mit wenigstens zwei wasserbasierten Tinten auf ein Substrat gedruckt und bei der Temperatur T= T(imax) - dT_{sicher} thermisch getrocknet wird, mit dT_{sicher} > 0 Kelvin; und durch Auswerten des getrockneten zweiten Testmusters die Gesamttintenmenge M bestimmt wird. Kᵢ=1 steht hierbei für ein positives Auswerteergebnis (Trocknungsergebnis ist zufriedenstellend, keine sichtbaren bzw. detektierbaren Störungen ermittelt) und Kᵢ=-1 für ein negatives Auswerteergebnis (Trocknungsergebnis ist nicht zufriedenstellend bzw. detektierbare Störungen ermittelt).

Die Erfindung und deren bevorzugte Weiterbildungen werden nachfolgend unter Bezug auf die Zeichnungen anhand eines bevorzugten Ausführungsbeispiels näher beschrieben. Zur besseren Übersichtlichkeit sind in den Zeichnungen einander entsprechende Elemente mit denselben Bezugszeichen versehen und Bezugszeichen, welche sich bloß wiederholen würden, teils weggelassen.

Die Zeichnungen zeigen:
- Figur 1: Eine Darstellung von Verfahrensschritten eines bevorzugten Ausführungsbeispiels des erfindungsgemäßen Verfahrens;
- Figur 2: Eine Darstellung von weiteren Verfahrensschritten des bevorzugten Ausführungsbeispiels des erfindungsgemäßen Verfahrens;
- Figur 3: Einen Ablaufplan von Verfahrensschritten eines bevorzugten Ausführungsbeispiels des erfindungsgemäßen Verfahrens; und
- Figur 4: Einen Ablaufplan von weiteren Verfahrensschritten des bevorzugten Ausführungsbeispiels des erfindungsgemäßen Verfahrens

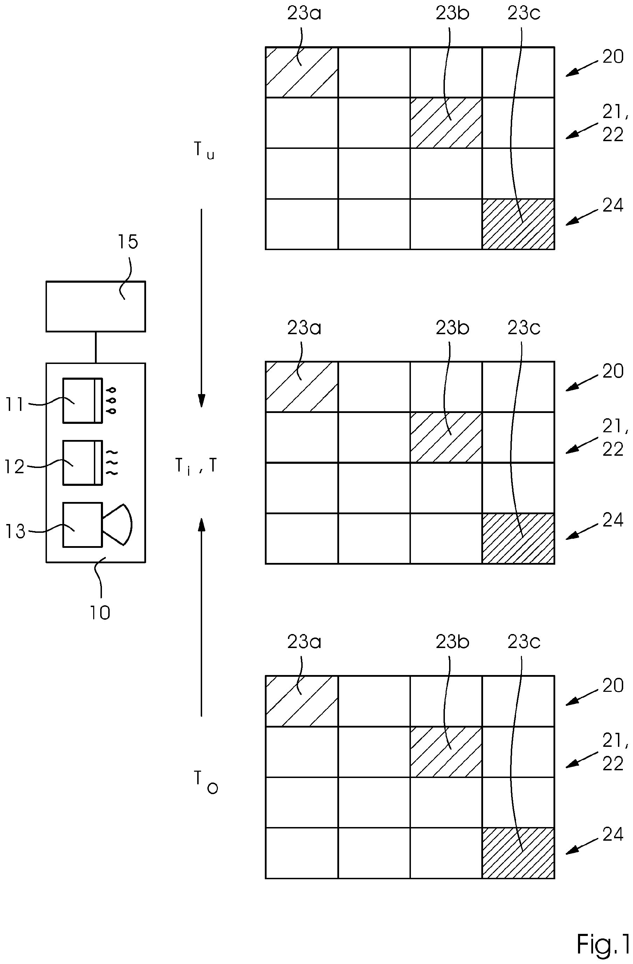

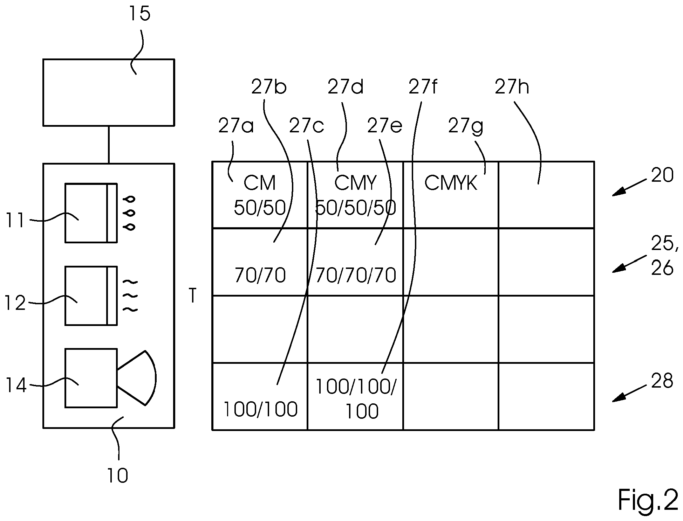

In Figur 1 ist schematisch eine Tintendruckmaschine 10 dargestellt, in welcher oder für welche das erfindungsgemäße Verfahren zum Einrichten und Betreiben einer Tintendruckmaschine für einen Druckauftrag durchgeführt wird. Die Maschine umfasst wenigstens drei Tinten-Druckköpfe 11, insbesondere DOD-Piezo-Köpfe, und wenigstens einen thermischen Trockner 12, insbesondere einen Infrarot-LED-Trockner. Weiterhin umfasst die Maschine oder ein Bedienpult/Messtisch/Peripheriegerät der Maschine gemäß Figur 1 eine optische Kamera 13 und gemäß Figur 2 einen Widerstandssensor 14.

Figur 1 zeigt beispielhaft drei Bedruckstoffe 20 (nachfolgend ohne Einschränkung als Papierbogen angenommen) beim thermischen Trocknen mit unterschiedlichen Temperaturen Tᵢ bzw. T (i: Zählindex; entspricht der Anzahl der verschiedenen Trocknungstemperaturen): bei einer unteren oder niedrigen Temperatur Tᵤ, bei einer oberen oder hohen Temperatur Tₒ und bei einer dazwischenliegenden Temperatur Tᵢ bzw. T. Es können auch nur zwei oder mehr als drei Papierbogen thermisch getrocknet werden, z.B. bei Tᵤ und T, bei Tₒ und T oder bei weiteren Temperaturen zwischen den genannten.

Jeder der zwei, drei oder mehr Papierbogen 20 ist mittels der Tintendruckmaschine 10 mit einem ersten Testmuster 21 bedruckt und bildet somit einen ersten Testdruck 22. Das erste Testmuster ist zumindest abschnittsweise von einem der wenigstens drei Tinten-Druckköpfe 11 mit wasserbasierter, schwarzer Tinte 24 erzeugt. Das erste Testmuster umfasst wenigstens zwei oder mehr Testfelder 23a-c unterschiedlicher Flächendeckung, z.B. in der gezeigten Matrixanordnung. Die Testfelder sind bevorzugt als Vollton-Felder und bevorzugt mit geringer Schichtdicke ausgeführt.

Das erste Testmuster umfasst vorzugsweise ein Testfeld 23a mit niedriger Flächendeckung (<30%) und ein Testfeld 23 c mit hoher Flächendeckung (>70%). Vorzugsweise umfasst das erste Testmuster auch ein Testfeld 23b mit mittlerer Flächendeckung (30% bis 70%). Testfelder niedriger Flächendeckung reagieren sehr sensibel auf eine zu starke Trocknung, d.h. sie sind sehr temperaturempfindlich und werden als erste Störungen bei zu starker Trocknung zeigen.

Die (bei verschiedenen Temperaturen) getrockneten ersten Testdrucke 22 bzw. schwarze, erste Testmuster 21 werden nach erfolgtem Trocknen zur Bestimmung einer passenden Temperatur T für den Betrieb des Trockners 12 bei dem Druckauftrag, d.h. für das Trocknen während des Druckauftrags, ausgewertet: Bei der passenden Temperatur T bzw. auf dem zugehörigen Testdruck 22 sind alle, d.h. zumindest alle ausgewerteten, Testfelder 23a-c des ersten Testmusters 21 ausreichend und störungsfrei getrocknet. Die derart ausgewertete Temperatur T wird aus dem Satz von Tᵢ ausgewählt.

Zur Auswertung werden die getrockneten ersten Testdrucke 22 optisch erfasst, insbesondere mit der optischen Kamera 13. Alternativ ist auch eine visuelle Auswertung möglich. Vorzugsweise werden alle Testfelder 23a-c des ersten Testmusters 21 optisch erfasst und ausgewertet. Das Auswerten erfolgt rechnergestützt, d.h. mittels des Rechners 15, vorzugsweise unter Einsatz digitaler Bildverarbeitung. Dabei wird jedes Feld 23a-c untersucht und bestimmt, ob das Trocknungsergebnis für das jeweilige Feld zufriedenstellend ist, d.h. dass der Farbfilm z.B. homogen ist oder keine Blasen und/oder Risse aufweist. Das Auswerten der getrockneten ersten Testdrucke 22 erfolgt vorzugsweise, indem rechnergestützt geprüft wird, ob der getrocknete Papierbogen 20 und/oder die getrocknete wasserbasierte, schwarze Tinte 24 frei von sichtbaren bzw. im optischen Spektrum detektierbaren Störungen ist, z.B. frei von Helligkeitsschwankungen.

Figur 2 zeigt einen Bedruckstoff 20 (nachfolgend ohne Einschränkung ebenfalls als Papierbogen angenommen) mit einem zweiten Testdruck 26 bzw. einem zweiten Testmuster 25 und mit zwei oder mehr Testfeldern 27a-h unterschiedlicher Tintenmenge. Das zweite Testmuster bzw. dessen Testfelder sind von zwei oder mehr der wenigstens drei Tinten-Druckköpfe 11 mit wasserbasierter, bunter Tinte 28 erzeugt ("bunt" bedeutet: nicht schwarz). Die Testfelder weißen bevorzugt helle Tinten, also z.B. Cyan und Magenta auf, da diese bei gegebener Trocknerleistung bzw. passender Trocknungstemperatur T weniger trocknen als im Vergleich schwarze Tinte und daher sehr sensible Testfelder bilden.

### Beispiele:

Das Testfeld 27a ist aus den bunten Tinten Cyan (C) und Magenta (M) gedruckt, wobei Cyan mit 50% der maximal möglichen Cyan-Tintenmenge (Ink Limit für Cyan) und Magenta mit 50% der maximal möglichen Magenta-Tintenmenge (Ink Limit für Magenta) gedruckt sind.

Das Testfeld 27e ist aus den bunten Tinten Cyan (C), Magenta (M) und Gelb (Y) gedruckt, wobei Cyan mit 50% der maximal möglichen Cyan-Tintenmenge, Magenta mit 50% der maximal möglichen Magenta-Tintenmenge und Gelb mit 50% der maximal möglichen Gelb-Tintenmenge (Ink Limit für Gelb) gedruckt sind.

Es können Testfelder mit 2, 3, 4 oder mehr bunten Tinten (z.B. Cyan, Magenta, Gelb, Orange, Grün, Violett, oder sonstige Sonderfarben) vorgesehen sein. Es kann auch vorgesehen sein, zusätzlich schwarze Tinte in ein Testfeld zu drucken, wie z.B. im Testfeld 27g gezeigt.

Jedes Testfeld 27a-h weist somit eine Gesamttintenmenge M (Total Ink Limit) auf, welche sich als Summe aus den Teil-Tintenmengen (Ink Limits) der im jeweiligen Testfeld vorhandenen Tinten ergibt.

Der zweite Testdruck 26 wird mittels des Trockners 12 bei der zuvor bestimmten, passenden Temperatur T thermisch getrocknet und der getrocknete zweite Testdruck zur Bestimmung einer Gesamttintenmenge M für den Betrieb der Druckköpfe bei dem Druckauftrag d.h. für das Drucken während des Druckauftrags, ausgewertet.

Zur Auswertung wird der getrocknete zweite Testdruck 26 einer Widerstandsmessung unterzogen, insbesondere mit dem Widerstandssensor 14. Vorzugsweise werden alle Testfelder 27a-h des zweiten Testmusters 25 erfasst und ausgewertet. Das Auswerten erfolgt wiederum rechnergestützt, d.h. mittels des Rechners 15. Dabei wird jedes Feld 23a-c untersucht und bestimmt, ob das Trocknungsergebnis für das jeweilige Feld zufriedenstellend ist, d.h. dass der Farbfilm z.B. homogen ist oder keine Blasen und/oder Risse aufweist. Das Auswerten der getrockneten zweiten Testdrucke 26 erfolgt vorzugsweise, indem rechnergestützt geprüft wird, in welchen Testfeldern die getrockneten, bunten Tinten 24 einen vorgegebenen Widerstandsgrenzwert erreichen oder unterschreiten, insbesondere den so genannten SR-Wert ("Surface Resistance"-Wert), und welches dieser Testfelder die höchste und damit passende Gesamttintenmenge M aufweist. Alternativ kann geprüft werden, in welchen Testfeldern die getrockneten, bunten Tinten 24 einen vorgegebenen Widerstandswerte-Bereich, insbesondere den so genannten SR-Wert, einhalten. Wiederum alternativ ist auch eine haptische Prüfung auf Trocknung durch einen erfahrenen Bediener möglich. Der Widerstandsgrenzwert oder der Widerstandswerte-Bereich ergibt sich dabei in der Praxis wie folgt: Es wird zunächst experimentell bestimmt, ob (und bei welchen gemessenen Wert oder in welchem Wertebereich) ein oder mehrere Bogen ausreichend getrocknet sind, d.h. dass z.B. ein Ablegen auf einem Bogenstapel problemlos, insbesondere ohne Verblocken möglich ist. Die experimentell bestimmten Werte oder Wertebereiche sind dabei vom tatsächlich verwendeten Messgerät abhängig, falls dieses keine Absolutwerte angibt, und werden für spätere Messungen als Kalibration bzw. für einen Vergleich verwendet. Falls die Bogen abschließend mit Lack beaufschlagt werden, wird der Wert oder der Wertebereiche niedriger gewählt, da durch den Lack zusätzliche Feuchtigkeit in den Bogen eingebracht wird.

Unter Einsatz des ersten Testmusters 21 und des davon - zumindest in den relevanten, d.h. ausgewerteten Testfeldern - verschiedenen zweiten Testmusters 25 werden auf die zuvor beschrieben Weise die passende Temperatur T und die passende Gesamttintenmenge M der Tintendruckmaschine für den Druckauftrag bereitgestellt und der Druckauftrag entsprechend ausgeführt. Dies bedeutet: der Druckauftrag wird so ausgeführt, dass an keiner Stelle des zu druckenden Druckbildes die erfindungsgemäß ermittelte Gesamtfarbmenge M überschritten wird und dass das Druckbild bei der erfindungsgemäß ermittelten Temperatur T getrocknet wird.

Es ist auch möglich, die beiden Testdrucke 22 und 26 bzw. die beiden Testmuster 21 und 25 zu vereinen und ein gemeinsames Testmuster mit allen relevanten Testfeldern zur Bestimmung von T und M zu drucken und auszuwerten.

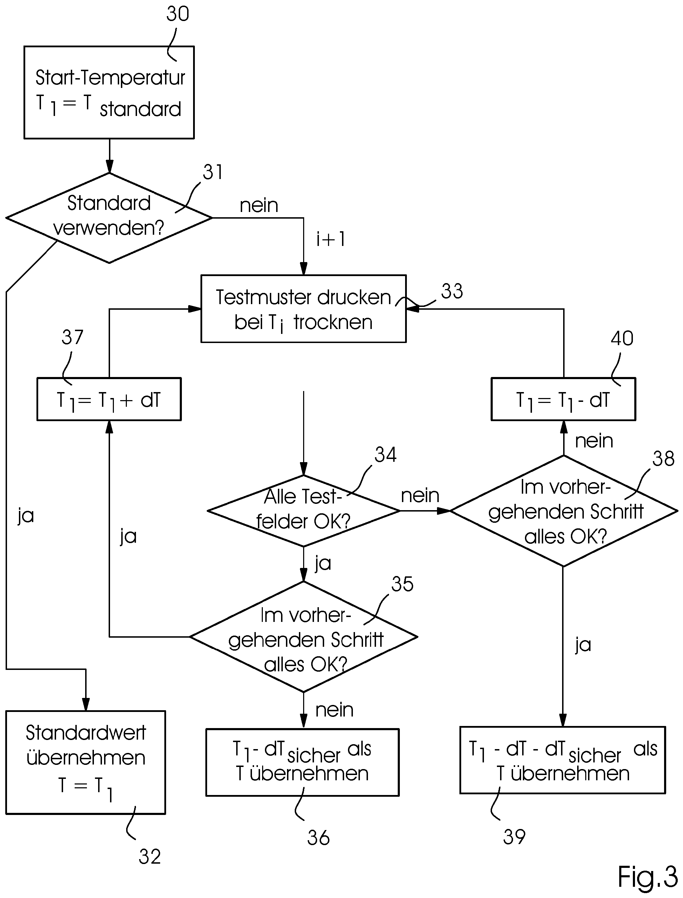

Der in Figur 3 dargestellte schrittweise Ablauf des Verfahrens korrespondiert zu dem mit Blick auf Figur 1 beschriebenen Vorgehen und wird im Folgenden beschrieben. Die dargestellten Schritte erfolgen dabei rechnergestützt.

Verfahrensschritt 30: Es wird als Startwert eine Standard-Temperatur T_{Standard} = Tᵢ mit i=l, also T₁ festgelegt, z.B. die obere Temperatur Tₒ oder die untere Temperatur Tᵤ.

Verfahrensschritt 31: Es wird entschieden, ob die Standard-Temperatur als Trocknungstemperatur verwendet werden soll.

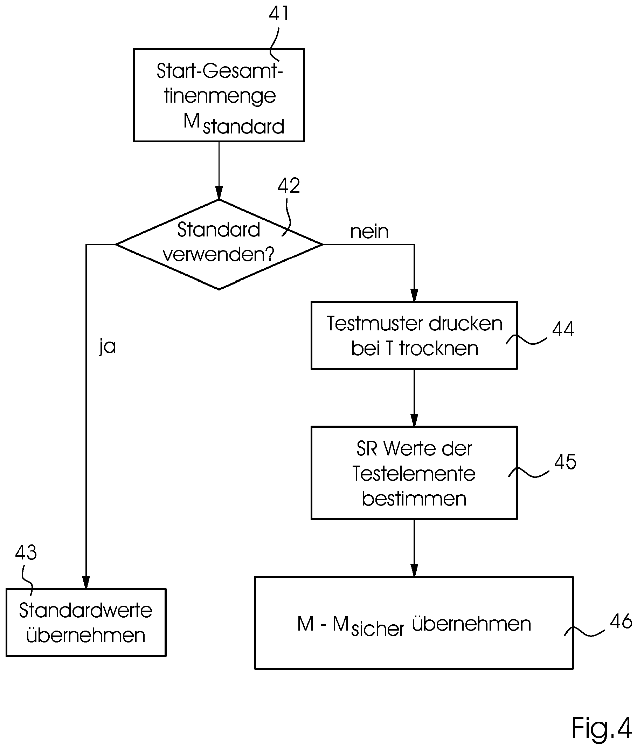

Verfahrensschritt 32 (31: ja): Es wird T=T₁ gesetzt und zu dem in Figur 4 dargestellten Ablauf gesprungen.

Verfahrensschritt 33 (31: nein): Es wird ein erster Testdruck 22 mit einem ersten Testmuster 21 gedruckt und bei Temperatur Tᵢ mit i=2 getrocknet. Falls eine hohe (d.h. erwartbar über der passenden Temperatur T liegende) Standard-Temperatur gewählt wurde, so wird T₂ kleiner T₁ gewählt, d.h. die Trocknungstemperatur wird verringert. Umgekehrt wird die Trocknungstemperatur erhöht, wenn bei einer niedrigen Standard-Temperatur begonnen wurde.

Verfahrensschritt 34: Es wird kameratechnisch und rechnergestützt geprüft, ob wenigstes eines oder zwei, bevorzugt alle Testfelder 23a-c zufriedenstellen getrocknet sind, also z.B. frei von sichtbaren bzw. im optischen Spektrum detektieren Störungen sind.

Verfahrensschritt 35 (34: ja): Es wird rechnergestützt geprüft, ob im vorhergehenden Schritt (i-1) ebenfalls wenigstes eines, bevorzugt alle Testfelder 23a-c zufriedenstellen getrocknet waren.

Verfahrensschritt 36 (35: nein): Es wird T=Tᵢ - dT_{sicher} gesetzt. Dabei ist dT_{sicher} eine aus Sicherheitsgründen gewählte und auf einen bestimmten Wert festgelegte Temperaturdifferenz, bevorzugt etwa 5° C oder niedriger. Dann wird zu dem in Figur 4 dargestellten Ablauf gesprungen.

Verfahrensschritt 37 (35: ja) Es wird der Zähler i um eins erhöht, Tᵢ um eine vorgegebene Temperaturdifferenz dt erhöht, bevorzugt etwa 5° C oder niedriger, und zu Schritt 33 zurückgekehrt.

Verfahrensschritt 38 (34: nein): Es wird rechnergestützt geprüft, ob im vorhergehenden Schritt (i-1) ebenfalls wenigstes eines, bevorzugt alle Testfelder 23a-c zufriedenstellen getrocknet waren.

Verfahrensschritt 39 (38: ja): Es wird T=Tᵢ - dt - dT_{sicher} gesetzt. Dabei ist dT die vorgegebene Temperaturdifferenz und dT_{sicher} die aus Sicherheitsgründen gewählte und auf einen bestimmten Wert festgelegte Temperaturdifferenz. Dann wird zu dem in Figur 4 dargestellten Ablauf gesprungen.

Verfahrensschritt 40 (38: nein): Es wird der Zähler i um eins erhöht, Tᵢ um einen vorgegebenen Temperaturschritt dt verringert, bevorzugt etwa 5° C oder niedriger, und zu Schritt 33 zurückgekehrt.

Der in Figur 4 dargestellte schrittweise Ablauf des Verfahrens korrespondiert zu dem mit Blick auf Figur 2 beschriebenen Vorgehen und wird im Folgenden beschrieben. Die dargestellten Schritte erfolgen dabei rechnergestützt.

Verfahrensschritt 41: Es wird als Startwert eine Standard-Gesamttintenmenge M_{Standard} festgelegt.

Verfahrensschritt 42: Es wird entschieden, ob die Standard-Gesamttintenmenge als Gesamttintenmenge M verwendet werden soll.

Verfahrensschritt 43 (42: ja): Es wird M=M_{Standard} gesetzt und es werden T und M für den Druckauftrag bereitgestellt. Dann wird der Druckauftrag ausgeführt.

Verfahrensschritt 44 (42: nein): Es wird ein zweiter Testdruck 26 mit einem zweiten Testmuster 25 gedruckt und bei der zuvor bestimmten, passenden Temperatur T getrocknet.

Verfahrensschritt 45: Es werden die Testfelder 27a-h (wenigstens eines oder zwei davon, bevorzugt alle Felder) sensortechnisch und rechnergestützt ausgewertet. Dabei wird die zur bereits bestimmten Trockner-Temperatur T passende Gesamttintenmenge M bestimmt.

Verfahrensschritt 46: Es wird M=M - M_{sicher} gesetzt und es werden T und M für den Druckauftrag bereitgestellt. Dann wird der Druckauftrag ausgeführt. Dabei M_{sicher} eine aus Sicherheitsgründen gewählte und auf einen bestimmten Wert festgelegte Gesamttintenmengen- Differenz.

Das in den Figuren 1 bis 4 dargestellte und hier zuvor beschriebene Verfahren kann bevorzugt für das Einrichten und Betreiben einer Tintendruckmaschine mit den folgenden Merkmalen durchgeführt werden: Eine bogenverarbeitende Tintendruckmaschine für die industrielle Produktion mehrfarbiger Druckprodukte im Inkjet-Druckverfahren bei vorgegebener Druckauflösung, z.B. 1.200 x 1.200 dpi, und Verarbeitungsgeschwindigkeit, z.B. 2.500 Bogen im Format 70 x 100 pro Stunde. Die Maschine umfasst einen Stapel-Anleger, ein so genanntes Precoat-Werk für den Auftrag einer Vorbeschichtung, ein Inkjet-Druckwerk für das bildgemäße Bedrucken der Bogen, ein Lackwerk und einen Stapel-Ausleger. Die Bogen werden mit Zylindern durch die Maschine transportiert und bestehen bevorzugt aus Papier, alternativ aus Karton. Das Druckwerk umfasst sieben in Bogen-Transportrichtung aufeinander folgend angeordnete Druckstationen zum Übertragen von Tintentropfen, bevorzugt der Prozess-Farben KCMYOGV (Schwarz, Cyan, Magenta, Gelb, Orange, Grün und Violett). Jede Station umfasst eine im Wesentlichen quer zur Transportrichtung ausgerichtete Anordnung von im Druckbetrieb unbewegten Druckköpfen mit je einer Vielzahl an einzeln ansteuerbaren Druckdüsen zum Erzeugen der Tropfen ("Drop on demand" bzw. DOD). Die Stationen ermöglichen das seitenbreite Bedrucken einer Bogenseite im so genannten single-pass-Betrieb, d.h. die Bogenseiten gelangen nur einmal in den Wirkbereich der Stationen. Die Tinten sind wasserbasierte Tinten, deren Tropfen mit der Vorbeschichtung reagieren um Druckpunkte hoher Punktschärfe zu bilden, und enthalten als Farbmittel Pigmente. Der Trockner ist ein thermischer Trockner mit Infrarot-Strahlern, bevorzugt LED-Strahlern, und dient dem Verdampfen des Wassers aus der verdruckten Tinte bzw. aus dem Bedruckstoff. Es können auch weitere Trockner vorgesehen sein, z.B. nach dem Precoat- und dem Lack-Werk und im Ausleger. Die Maschine umfasst auch eine Maschinensteuerung mit einem Rechner und einem auf dem Rechner laufenden Steuerprogramm, wobei der Rechner Teil eines nicht dargestellten Bedienpults sein kann. Ebenfalls nicht dargestellt sind eine Einrichtung zur Versorgung der Druckstationen mit Tinten und eine Einrichtung zur Reinigung der Druckköpfe.

### Bezugszeichenliste

- 10: Maschine
- 11: Druckköpfe
- 12: Trockner
- 13: Kamera
- 14: Sensor
- 15: Rechner
- 20: Bedruckstoffe
- 21: 1. Testmuster
- 22: 1. Testdrucke
- 23a-c: Testfelder
- 24: schwarze Tine
- 25: zweites Testmuster
- 26: zweite Testdrucke
- 27a-h: Testfelder
- 28: bunte Tinte
- 30-46: Verfahrensschritte

- T: Temperatur
- Tᵢ: Temperatur
- Tᵤ: untere Temperatur
- Tₒ: obere Temperatur
- M: Gesamttintenmenge

## Patentansprüche

1. Verfahren zum Einrichten und Betreiben einer Tintendruckmaschine für einen Druckauftrag, wobei die Tintendruckmaschine (10) wenigstens drei Tinten-Druckköpfe (11) und wenigstens einen thermischen Trockner (12) umfasst, der Druckauftrag auf einem Bedruckstoff (20) mit wasserbasierter, schwarzer Tinte (24) und mit wenigstens zwei wasserbasierten, bunten Tinten (28) ausgeführt wird und wobei:
a) mehrere erste Testdrucke (22) eines ersten Testmusters (21), welches wenigstes zwei oder mehr Testfelder (23a-c) unterschiedlicher Flächendeckung umfasst, mit der wasserbasierten, schwarzen Tinte auf dem Bedruckstoff erzeugt werden, die ersten Testdrucke bei verschiedenen Temperaturen (Tᵢ) thermisch getrocknet werden und die getrockneten ersten Testdrucke zur Bestimmung einer Temperatur T für den Betrieb des Trockners bei dem Druckauftrag ausgewertet werden, wobei das Auswerten der getrockneten ersten Testdrucke (22) erfolgt, indem in wenigstens einem Testfeld (23a-c) des ersten Testmusters (21) geprüft wird, ob der getrocknete Bedruckstoff (20) und/oder die getrocknete wasserbasierte, schwarze Tinte (24) frei von sichtbaren Störungen ist;
b) ein zweiter Testdruck (26) eines zweiten Testmusters (25), welches wenigstes zwei oder mehr Testfelder (27a-h) unterschiedlicher Tintenmenge umfasst, mit den wenigstens zwei wasserbasierten bunten Tinten auf dem Bedruckstoff erzeugt wird, der zweite Testdruck bei der Temperatur T thermisch getrocknet wird und der getrocknete zweite Testdruck zur Bestimmung einer Gesamttintenmenge M für den Betrieb der Druckköpfe bei dem Druckauftrag ausgewertet wird, wobei das Auswerten des getrockneten zweiten Testmusters (25) erfolgt, indem in wenigstens einem Testfeld (27a-h) des zweiten Testmusters geprüft wird, ob die getrockneten wasserbasierten, bunten Tinten (28) einen vorgegebenen Widerstandsgrenzwert erreichen oder unterschreiten, insbesondere den SR-Wert; und
c) die Temperatur T und die Gesamttintenmenge M der Tintendruckmaschine für den Druckauftrag bereitgestellt werden und der Druckauftrag ausgeführt wird.

2. Verfahren nach Anspruch 1,
**dadurch gekennzeichnet,**
**dass** das Auswerten in allen Testfeldern (23a-c) des ersten Testmusters (21) erfolgt.

3. Verfahren nach einem der Ansprüche 1 oder 2,
**dadurch gekennzeichnet,**
**dass** die getrockneten ersten Testdrucke (22) zur Auswertung optisch erfasst werden, insbesondere mit einer optischen Kamera (13).

4. Verfahren nach einem der vorhergehenden Ansprüche,
**dadurch gekennzeichnet,**
**dass** das Auswerten in allen Testfeldern (27a-h) des zweiten Testmusters (25) erfolgt.

5. Verfahren nach Anspruch 4,
**dadurch gekennzeichnet,**
**dass** der getrocknete zweite Testdruck (26) zur Auswertung über eine Widerstandsmessung erfasst wird, insbesondere mit einem Widerstandssensor.

## Claims

1. Method of setting up and operating an ink printing machine for a print job, wherein the ink printing machine (10) comprises at least three ink printing heads (11) and at least one thermal drier (12), wherein the print job is carried out on a printing material (20) using water-based black ink (24) and at least two water-based chromatic inks (28), and wherein
a) multiple first test prints (22) of a first test chart (21) comprising at least two or more test fields (23a-c) of varying area coverage are created on the printing material using the water-based black ink, the first test prints are thermally dried at varying temperatures (Tᵢ) and the dried first test prints are analyzed to determine a temperature T for the operation of the drier during the print job, wherein the analysis of the dried first test prints (22) is done by checking at least one fest field (23a-c) of the first test chart (21) to see if the dried printing material (20) and/or the dried water-based black ink (24) are free of visible defects;
b) a second test print (26) of a second test chart (25) comprising at least two or more test fields (27a-h) of varying ink volume is created on the printing material using the at least two water-based chromatic inks, the second test print is thermally dried at temperature T, and the dried second test print is analyzed to determine a total ink amount M for the operation of the printing heads during the print job, wherein the analysis of the dried second test chart (25) is done by checking at least one test field (27a-h) of the second test chart to see if the dried water-based chromatic inks (28) reach or stay below a predefined resistance threshold, in particular the SR value; and
c) the temperature T and the total amount of ink M are provided to the ink printing machine for the print job and the print job is processed.

2. Method according to claim 1,
**characterized**
**in that** the analysis is done in all test fields (23a-c) of the first test chart (21).

3. Method according to any one of claims 1 or 2,
**characterized**
**in that** the dried first test prints (22) are optically recorded for analysis, in particular by means of an optical camera (13).

4. Method according to any one of the preceding claims,
**characterized**
**in that** the analysis is done in all test fields (27a-h) of the second test chart (25).

5. Method according to claim 4,
**characterized**
**in that** the dried second test print (26) is recorded for analysis via resistance measurement, in particular by means of a resistance sensor.

## Revendications

1. Procédé de mise en route et d'exploitation d'une machine à imprimer à encre pour un travail d'impression, la machine à imprimer à encre (10) comprenant au moins trois têtes d'impression à encre (11) et au moins un sécheur thermique (12), le travail d'impression étant réalisé sur un support d'impression (20) avec de l'encre noire à base aqueuse (24) et avec au moins deux encres de couleur à base aqueuse (28), pour lequel :
a) plusieurs premières impressions-test (22) d'un premier échantillon de test (21), comprenant au moins deux ou plusieurs champs de test (23a-c) de couverture de surface différente sont réalisées sur le support d'impression avec l'encre noire à base aqueuse, les premières impressions-tests étant séchées thermiquement à différentes températures (Tᵢ), et les premières impressions de test séchées évaluées pour déterminer une température T pour le fonctionnement du sécheur pendant le travail d'impression, l'évaluation des premières impressions-test séchées (22) étant effectuée en vérifiant dans au moins un champ de test (23 a-c) du premier échantillon de test (21) si le support d'impression séché (20) et/ou l'encre noire à base aqueuse séchée (24) sont exempts de perturbations visibles ;
b) une deuxième impression-test (26) d'un deuxième échantillon de test (25), comprenant au moins deux ou plusieurs champs de tests (27a-h) de quantités d'encre différentes, est réalisée avec les deux encres de couleur à base aqueuse au moins sur le support d'impression, la deuxième impression-test étant séchée thermiquement à la température T et la deuxième impression-test séchée évaluée pour déterminer une quantité d'encre totale M pour le fonctionnement des têtes d'impression durant le travail d'impression, l'évaluation du deuxième échantillon de test (25) étant effectuée en vérifiant dans au moins un champ de test (27a-h) du deuxième échantillon de test si les encres de couleur à base aqueuse séchées (28) atteignent ou dépassent par le bas une valeur limite de résistance prédéterminée, notamment la valeur SR, et
c) la température T et la quantité totale d'encre M sont mises à la disposition de la machine à imprimer à jet d'encre pour le travail d'impression et le travail d'impression est exécuté.

2. Procédé selon la revendication 1,
**caractérisé en ce**
**que** l'évaluation a lieu dans tous les champs de test (23a-c) du premier échantillon de test (21).

3. Procédé selon l'une des revendications 1 ou 2,
**caractérisé en ce**
**que** les premières impressions-tests séchées (22) sont enregistrées optiquement pour évaluation, notamment avec une caméra optique (13).

4. Procédé selon l'une des revendications précédentes,
**caractérisé en ce**
**que** l'évaluation s'effectue dans tous les champs de test (27a-h) du deuxième échantillon-test (25).

5. Procédé selon la revendication 4,
**caractérisé en ce**
**que** la deuxième impression test séchée (26) est enregistrée pour évaluation via une mesure de résistance, notamment avec un capteur de résistance.
